# EUROPÄISCHE PATENTSCHRIFT

(11) **EP 3 418 698 B1**
(45) Veröffentlichungstag und Bekanntmachung des Hinweises auf die Patenterteilung: **06.03.2024**
(21) Anmeldenummer: 17177111.6
(22) Anmeldetag: 21.06.2017
(51) Int. Cl.: G01F 23/284, G01S 13/34, G01S 13/88

(54) **FÜLLSTANDREFLEKTOMETER MIT REFERENZREFLEXION**
FILL LEVEL REFLECTOMETER WITH REFERENCE REFLECTION
RÉFLECTOMÈTRE DE NIVEAU DE REMPLISSAGE AYANT UNE RÉFLEXION DE RÉFÉRENCE

(43) Veröffentlichungstag der Anmeldung: 26.12.2018
(73) Patentinhaber: VEGA Grieshaber KG, 77709 Wolfach (DE)
(72) Erfinder: GRIESSBAUM, Karl, 77796 Mühlenbach (DE); WELLE, Roland, 77756 Hausach (DE); CORBE, Bernhard, 77746 Schutterwald (DE)
(74) Vertreter: Maiwald GmbH

(56) Entgegenhaltungen:
- EP-A2- 2 293 096
- US-A- 4 503 433
- US-A1- 2014 333 470
- SAITO T ET AL: "An FM-CW radar module with front-end switching heterodyne receiver", MICROWAVE SYMPOSIUM DIGEST, 1992., IEEE MTT-S INTERNATIONAL ALBUQUERQUE, NM, USA 1-5 JUNE 1992, NEW YORK, NY, USA,IEEE, US, 1. Juni 1992 (1992-06-01), Seiten 713-716vol.2, XP032363243, DOI: 10.1109/MWSYM.1992.188084 ISBN: 978-0-7803-0611-0

## Beschreibung

### Gebiet der Erfindung

Die Erfindung betrifft das technische Gebiet der Füllstandmessung. Insbesondere betrifft die Erfindung ein Füllstandradargerät, auch Füllstandreflektometer genannt, das den Füllstand aus der Laufzeit elektromagnetischer Wellen bestimmt, die vom Messgerät ausgesendet und nach Reflexion am Füllgut wieder empfangen werden. Weiter betrifft die Erfindung ein Verfahren zur Füllstandbestimmung, ein Programmelement und ein computerlesbares Medium.

### Hintergrund

Die vorliegende Erfindung wird im Umfeld von Füllstandmessgeräten angewendet, und betrifft insbesondere Füllstandmessgeräte, welche den Füllstand aus der Laufzeit elektromagnetischer Wellen bestimmen, die vom Messgerät ausgesendet und nach Reflexion am Füllgut wieder empfangen werden. Aus der Laufzeit der Wellen lässt sich ein Abstand zwischen Messgerät und Füllgut und aus diesem wiederum ein Befüllungsgrad eines mit dem Messgerät ausgestatteten Behälters ermitteln.

Bei den elektromagnetischen Wellen kann es sich um Hochfrequenzwellen oder Mikrowellen handeln. Sie können vom Messgerät in Richtung Füllgut frei abgestrahlt werden oder alternativ von einem Wellenleiter hin und zurückgeleitet werden.

Zur Messung der Laufzeit elektromagnetischer Wellen zwischen der Aussendung und dem Empfang sind verschiedene Messverfahren bekannt. Grundsätzlich handelt es sich hierbei um Verfahren, welche die Laufzeit sehr kurzer Sendepulse messen, meist als Puls-RADAR bezeichnet, und Verfahren, welche auf der Modulation von kontinuierlich gesendeten Signalen beruhen. Diese als CW (Continuous Wave)-RADAR bekannten Verfahren senden während der Dauer eines Messvorgangs kontinuierlich, womit die Sendedauer im Gegensatz zum Puls-Verfahren innerhalb eines Messzyklus typischerweise um Größenordnungen länger als die Laufzeit der Signale ist.

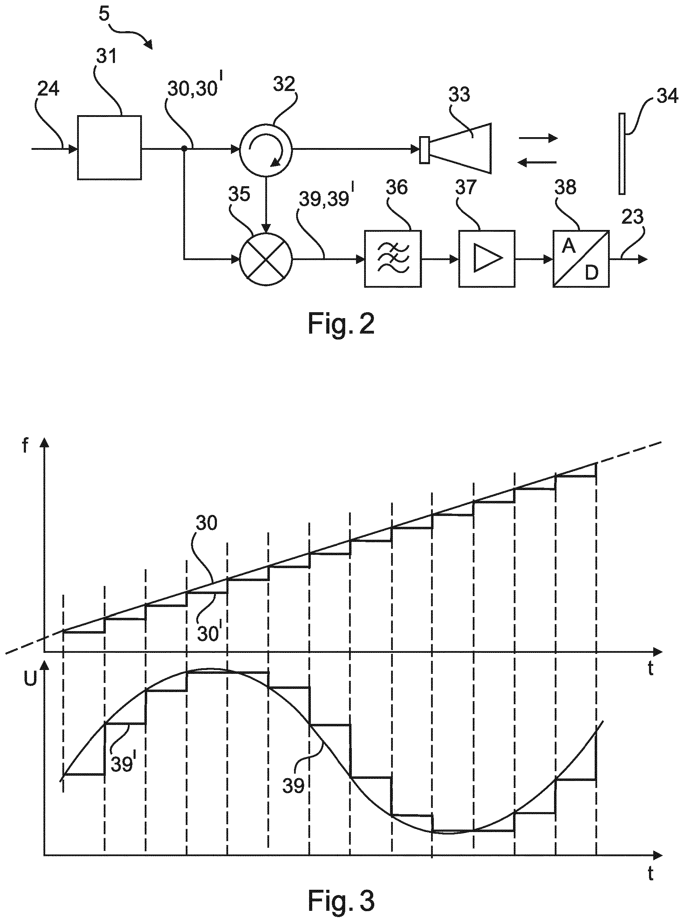

Durch die Modulation der Sende- und Empfangswellen lässt sich dabei die Laufzeit indirekt bestimmen. Beim FMCW-Verfahren (Frequency Modulated Continuous Wave) wird hierzu eine lineare Frequenzmodulation verwendet. Fig. 2 zeigt in Form eines stark vereinfachten Blockschaltbilds den grundsätzlichen Aufbau einer Sende-Empfangsschaltung 5 eines FMCW-Radarsensors. Der Synthesizer 31 dient zur Erzeugung des Sendesignals 30 und enthält hierzu beispielsweise einen VCO (voltage controlled oscillator). Über eine im Synthesizer 31 enthaltene Schaltung zur Kontrolle der Sendefrequenz, beispielsweise eine PLL-Schaltung (phase locked loop), wird das Sendesignal linear frequenzmoduliert. Dieses Sendesignal 30 gelangt über den Zirkulator 32 zur Antenne 33 und wird von dieser in Richtung Reflektor 34 gesendet. Das nach der Reflexion zur Antenne 33 zurückkehrende Empfangssignal gelangt über den Zirkulator 32 zum Mischer 35. Dieser mischt das Empfangssignal mit einem Teil des Sendesignals, wodurch ein sogenanntes Beatsignal 39 entsteht. Dieses wird nach Tiefpassfilterung im Filter 36 und entsprechender Verstärkung im Verstärker 37 von einem Analog-Digital-Wandler 38 digitalisiert und danach digital weiterverarbeitet. Durch die Mischung von Sende- und Empfangssignal, welche aus der gleichen Signalquelle 31 stammen, handelt es sich hier um ein sogenanntes homodynes Empfängerprinzip.

Die Entfernung des Reflektors 34 vom Messgerät wirkt sich direkt auf die Frequenz des Beatsignals 39 aus, weshalb umgekehrt aus der gemessenen Beatfrequenz direkt auf die Messentfernung geschlossen werden kann. Bei mehreren Reflektoren entsteht ein Beatsignal 39 mit einem Frequenzgemisch aus den verschiedenen Messentfernungen zugehörigen Einzelfrequenzen. Es ist daher üblich, das digitalisierte Beatsignal mit Hilfe einer Fouriertransformation, beispielsweise einer schnellen Fouriertransformation FFT (fast fourier transformation), einer Spektralanalyse zu unterziehen, um die einzelnen Frequenzanteile bzw. Reflexionsanteile zu separieren und gegebenenfalls hinsichtlich ihrer Frequenz und damit der zugrundeliegenden Messentfernung genau zu bestimmen. Fig. 3 zeigt einen Ausschnitt des Sendesignals 30 mit der linearen Frequenzmodulation in einem Zeit-Frequenz-Diagramm und direkt darunter in einem Zeit-Spannungs-Diagramm beispielhaft ein zugehöriges analoges Beatsignal 39, welches bei einer definierten Reflektorentfernung entsteht.

Eine bekannte Variante des FMCW-Verfahrens ist die Abwandlung der linearen Frequenzmodulation des Sendesignals in eine gestuft lineare Frequenzmodulation, wie sie in Fig. 3 als Alternative 30' dargestellt ist. Dabei verharrt das Sendesignal 30' für eine gewisse Zeitdauer auf einer bestimmten Frequenz und springt danach in gleichmäßigen Schritten weiter auf die nächsten Frequenzen. Durch die homodyne Mischung entsprechend dem auch hier gültigen Blockschaltbild aus Fig. 2 entsteht am Mischerausgang eine aus der gegenseitigen Phasenverschiebung von Sende- und Empfangssignal resultierende Gleichspannung für jede Frequenzstufe. Die aus jeder Stufe resultierenden Gleichspannungen ergeben hintereinander gesetzt einen der Beatfrequenz 39 des vorher beschriebenen FMCW-Verfahrens gemäßen Signalverlauf 39'. Dies ist in Fig. 3 ebenfalls ausschnittsweise skizziert. Wie aus der Abbildung deutlich wird wandelt sich das zuvor kontinuierliche Beatsignal 39 in ein gestuftes Analogsignal 39'. Bei einer anschließenden Analog-Digital-Wandlung dieses gestuften Signals 39' bietet sich natürlich an, pro Stufe genau einen Abtastwert zu wandeln, womit das digitalisierte Beatsignal der gestuften linearen Frequenzmodulation sich nicht wesentlich vom digitalisierten Beatsignal eines Standard-FMCW-Verfahrens unterscheidet. Deshalb ist die weitere digitale Signalverarbeitung, beginnend mit der Fouriertransformation, bei beiden Verfahren identisch.

Obwohl Füllstandmessgeräte basierend auf oben genannten bisher bekannten Verfahren zur Messung der Laufzeit elektromagnetischer Wellen aktuell schon sehr ausgereift und leistungsfähig sind, sind dennoch Verbesserungen möglich. Diese könnten beispielsweise höhere Signalempfindlichkeit, höhere Messgenauigkeit oder bessere Adaption des Messgeräts an die jeweilige Anwendung betreffen.

US 4,503,433 A beschreibt die Distanzmessung mithilfe von frequenzmodulierten kontinuierlichen Radarwellen, bei welchem dem reflektierten Sendesignal ein Oszillatorsignal konstanter Frequenz beigemischt wird.

### Zusammenfassung der Erfindung

Es ist Aufgabe der vorliegenden Erfindung, ein zu den bisherigen Verfahren alternatives Verfahren anzugeben, welches eine Füllstandmessung mit elektromagnetischen Wellen in vorteilhafter Weise erlaubt. Die vorliegende Erfindung wird durch die beigefügten Ansprüche 1-11 definiert.

Ein erster Aspekt der Erfindung betrifft ein Füllstandradargerät oder Füllstandreflektometer mit einer ersten Signalquellenanordnung und einer zweiten Signalquellenanordnung. Die erste Signalquellenanordnung dient dem Erzeugen eines ersten elektromagnetischen Signals mit abschnittsweise konstanter Frequenz, wobei die einzelnen Frequenzen innerhalb eines definierten Frequenzbandes verteilt sind. Die zweite Signalquellenanordnung dient dem Erzeugen eines zweiten elektromagnetischen Sendesignals. Es ist eine Sendeanordnung, beispielsweise in Form einer Antenne zur berührungslosen Messung oder in Form eines Wellenleiters, vorgesehen, zum Aussenden des ersten Signals in Richtung einer Füllgutoberfläche und zum Empfang des an der Füllgutoberfläche reflektierten ersten Signals. Darüber hinaus ist eine Mischeranordnung zum heterodynen Mischen des empfangenen reflektierten ersten Signals mi dem zweiten Signal zur Ausbildung eines Zwischenfrequenzsignals mit einer einheitlichen Frequenz vorgesehen, die unabhängig ist von der Frequenz des ersten Signals. Darüber hinaus weist das Füllstandradargerät eine Auswerteschaltung zum Bestimmen eines Füllstands aus dem Zwischenfrequenzsignal auf.

Heterodynes Mischen bedeutet, dass zwei unterschiedliche Signalquellenanordnungen vorgesehen sind, welche es ermöglichen, dass die Signale von unterschiedlichen Signalquellenanordnungen zum Erzeugen des Zwischenfrequenzsignals verwendet werden. Im Gegensatz hierzu erfolgt bei der sog. homodynen Mischung eine Mischung zweier Signale, die aus derselben Signalquelle bzw. Signalquellenanordnung stammen. Hierbei handelt es sich beispielsweise um das Sendesignal, das dem Mischer direkt von der Signalquellenanordnung zugeführt wird, und das Empfangssignal, bei dem es sich um das vom Füllgut reflektierten Sendesignal handelt.

Gemäß einer Ausführungsform der Erfindung weist die Auswerteschaltung eine erste Schaltungsanordnung zum Bestimmen eines komplexen Reflexionskoeffizienten aus dem Zwischenfrequenzsignal, beispielsweise in Form von Betrag und Phase oder in Form von Real- und Imaginärteil, auf. Gemäß einer weiteren Ausführungsform der Erfindung weist die Auswerteschaltung eine zweite Schaltungsanordnung zur Erstellung einer Wertetabelle aus den abschnittsweise konstanten Frequenzen des ersten Signals und dem zugehörigen komplexen Reflexionskoeffizienten auf.

Die konstanten Frequenzen des ersten Signals werden hintereinander abgestrahlt und für jede der konstanten Frequenzen wird der damit zusammenhängende komplexe Reflexionskoeffizient bestimmt. Die Wertetabelle weist somit für jede konstante Frequenz eine Wertegruppe bestehend aus einem Frequenzwert und dem zugehörigen komplexen Reflexionskoeffizienten auf.

Aus diesen verschiedenen Wertegruppen kann durch inverse Fouriertransformation dann der Füllstand eindeutig bestimmt werden.

Gemäß einer weiteren Ausführungsform der Erfindung ist die zweite Schaltungsanordnung zum Durchführen einer inversen Fourier-Transformation der Wertetabelle vom Frequenzbereich in den Zeitbereich und zur darauffolgenden Bestimmung des Füllstands aus der transformierten Wertetabelle eingerichtet.

Gemäß einer weiteren Ausführungsform der Erfindung weist die zweite Signalquellenanordnung eine Signalquelle zum Erzeugen eines Signals mit konstanter Frequenz auf.

Gemäß einer weiteren Ausführungsform der Erfindung weist das zweite Signal eine abschnittsweise konstante Frequenz auf, die einen konstanten Frequenzversatz zur Frequenz des ersten elektromagnetischen Signals aufweist.

Gemäß einer weiteren Ausführungsform der Erfindung sind die einzelnen Frequenzen des ersten Signals äquidistant zueinander innerhalb eines Frequenzbandes verteilt. Bei seilgeführten Sonden liegt dieses Frequenzband beispielsweise zwischen 1 GHz und 5 GHz und weist beispielsweise eine Breite von 3 GHz auf. Bei freistrahlenden Füllstandradargeräten liegt das Frequenzband mit einer Breite von etwa 10 GHz beispielsweise zwischen 70 und 80 GHz.

Es können aber auch insbesondere höhere Frequenzen vorgesehen sein, oder niedrigere.

Gemäß einer weiteren Ausführungsform der Erfindung ist ein Referenzreflektor vorgesehen, wobei die Auswerteschaltung eingerichtet ist, das an dem Referenzreflektor reflektierte erste Signal als Zeit- und/oder Amplitudenreferenz bei der Füllstandbestimmung zu verwenden. Somit ist eine exaktere Korrektur der Amplituden und Entfernungen der über die Antenne gemessenen Reflexionen möglich.

Gemäß einem weiteren Aspekt der Erfindung ist ein Verfahren zur Füllstandbestimmung angegeben, bei dem ein erstes elektromagnetisches Signal mit abschnittsweise konstanter Frequenz erzeugt wird, wobei die einzelnen Frequenzen innerhalb eines definierten Frequenzbandes verteilt sind. Gleichzeitig wird ein zweites elektromagnetisches Signal von einer anderen Signalquellenanordnung erzeugt. Das erste Signal wird in Richtung einer Füllgutoberfläche ausgesendet und das an der Füllgutoberfläche reflektierte erste Signal wird vom Messgerät wieder empfangen. Daraufhin erfolgt ein heterodynes Mischen des empfangenen reflektierten ersten Signals mit dem zweiten Signal zur Bildung eines Zwischenfrequenzsignals mit einer einheitlichen Frequenz, die unabhängig ist von der Frequenz des ersten Signals. Beide Signale stammen aus zumindest teilweise unterschiedlichen Signalquellenanordnungen. Aus dem Zwischenfrequenzsignal wird dann der Füllstand bestimmt, was im Regelfall eine inverse schnelle Fourier-Transformation beinhaltet.

Gemäß einer Ausführungsform weist das Verfahren die folgenden Merkmale auf:
Hintereinander folgende Aussendung mehrerer elektromagnetischer Wellen mit definierten, abschnittsweise festen Frequenzen innerhalb eines definierten Frequenzbandes, wobei die einzelnen Frequenzen über das Band verteilt sind.

Heterodyne Empfangsmischung der reflektierten und wieder empfangenen Signale zur Bildung einer einheitlichen Zwischenfrequenz unabhängig von der eingestellten Sendefrequenz.

Filterung und Verstärkung des Zwischenfrequenzsignals zur Unterdrückung von störenden Signalanteilen außerhalb des Bereichs der Zwischenfrequenz.

Bestimmung eines komplexen Reflexionskoeffizienten in der Form Betrag und Phase oder in Form von Real- und Imaginärteil auf der Grundlage des Zwischenfrequenzsignals.

Bildung einer digitalen Wertetabelle bestehend aus oben genannten Frequenzwerten und zugehörigen komplexen Reflexionskoeffizienten.

Durchführung einer inversen Fouriertransformation zur Transformation der genannten Wertetabelle in eine korrespondierende digitale Wertetabelle bestehend aus Zeitwerten und zugehörigen Reflexionskennwerten.

Auswertung des damit vorliegenden zeitbasierten Reflexionsprofils zur Identifizierung der Reflexion der Füllgutoberfläche.

Bestimmung des Zeitwertes der Füllgutreflexion und Umrechnung des Zeitwertes in eine Reflektorentfernung auf Basis der vorbekannten Wellenausbreitungsgeschwindigkeit.

Berechnung eines Werts des Befüllungsgrads aus der vorbekannten Behälterhöhe, dem Abstand des Sensors zum Behälter und der zuvor bestimmten Reflektorentfernung.

Ein weiteres vorteilhaftes Merkmal des Verfahrens ist die Verwendung einer Referenzreflexion (Entfernungsreferenz und /oder Amplitudenreferenz), welche z.B. durch Reflexion an einer Einkopplung / Antenne entstanden ist. Auch kann es sich hierbei um ein Zirkulator-Lecksignal, die Reflexion an einer internen ständigen Referenz oder das Signal einer schaltbaren Referenz oder eines separaten Referenzkanals handeln.

Ein weiterer Aspekt der Erfindung betrifft ein Programmelement, das, wenn es auf einer Auswerteschaltung eines Füllstandradargeräts ausgeführt wird, das Füllstandradargerät veranlasst, die oben und im Folgenden beschriebenen Schritte durchzuführen.

Ein letzter Aspekt der Erfindung betrifft ein computerlesbares Medium, auf dem das oben beschriebene Programmelement gespeichert ist.

Ein Kernaspekt der Erfindung ist in der Nutzung eines alternativen Füllstandradar-Verfahrens zu sehen, welches die Bestimmung von Reflexionskoeffizienten auf mehreren äquidistant über ein Frequenzband verteilten Frequenzen vorsieht. Außerdem ist ein weiteres vorteilhaftes Merkmal die Verwendung einer Referenzreflexion.

Im Folgenden werden Ausführungsformen der Erfindung unter Bezugnahme auf die Figuren beschrieben. In den folgenden Figuren bezeichnen gleiche Bezugszeichen gleiche oder ähnliche Elemente. Die Darstellungen in den Figuren sind schematisch und nicht maßstäblich.

### Kurze Beschreibung der Figuren

Fig. 1 zeigt den Aufbau eines Füllstandradargeräts.
Fig. 2 zeigt den Aufbau einer Sensorelektronik eines Füllstandradargeräts.
Fig. 3 zeigt zwei Varianten eines FMCW-Verfahrens.
Fig. 4 zeigt den Aufbau einer Sende-/Empfangsschaltung gemäß einer Ausführungsform der Erfindung.
Fig. 5 zeigt den Aufbau einer Sende-/Empfangsschaltung gemäß einer weiteren Ausführungsform der Erfindung.
Fig. 6 zeigt den Aufbau einer Sende-/Empfangsschaltung gemäß einer weiteren Ausführungsform, die nicht Teil der Erfindung ist.
Fig. 7 zeigt einen Teil einer Sende-/Empfangsschaltung mit einer Umschalteinheit gemäß einer Ausführungsform, die nicht Teil der Erfindung ist.
Fig. 8 zeigt die Nutzung einer Referenzreflexion gemäß einer weiteren Ausführungsform, die nicht Teil der Erfindung ist.
Fig. 9 zeigt ein Flussdiagramm eines Verfahrens gemäß einer Ausführungsform, die nicht Teil der Erfindung ist.

### Detaillierte Beschreibung von Ausführungsformen

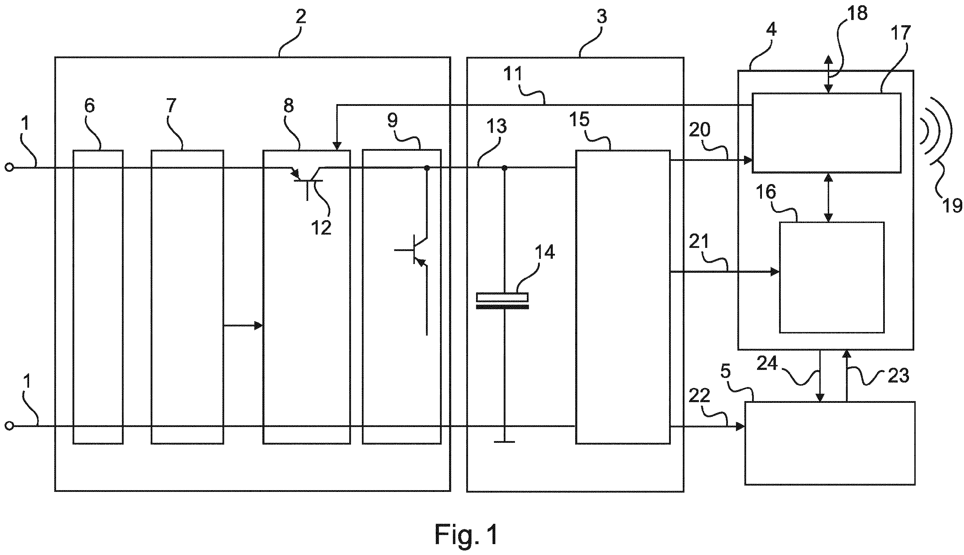

Fig. 1 zeigt den grundsätzlichen Aufbau eines Radar-Füllstandsensors, wie er weitgehend aus dem Stand der Technik bekannt ist. Es handelt sich in diesem Fall um einen sogenannten Zweileiter-Radarsensor, der über die Zweidrahtschleife 1 sowohl mit Energie versorgt wird als auch den Messwert nach außen signalisiert. Er ist im vorliegenden Blockschaltbild zunächst aufgeteilt in seine vier wesentlichen Blöcke Zweileiterschnittstelle 2, Netzteil 3, Steuer- und

Messwertverarbeitungsschaltung 4 sowie Sende- und Empfangsschaltung 5. Die Zweileiterschnittstelle 2 enthält eine EMV-Filterschaltung 6 zur Ausfilterung von Störsignalen, eine Stromfühlschaltung 7 zur Bestimmung des aktuell in der Stromschleife fließenden Stroms, eine Stromregelschaltung 8 sowie eine Shunt-Schaltung 9. Die Stromregelschaltung 8 vergleicht den aktuell von der Stromfühlschaltung 7 erfassten Istwert 10 der Regelung mit dem von der Steuer- und Messwertverarbeitungsschaltung 4 bereitgestellten Sollwert 11 und regelt beispielsweise über einen seriell geschalteten Transistor 12 den Schleifenstrom so, dass sich Soll- und Istwert entsprechen. Der am Ausgang 13 des Stromreglers 8 fließende Strom versorgt das Netzteil 3, wobei er sich aufteilt in einen Ladestrom für den Energiespeicher 14 und einen Betriebsstrom für den DC-DC-Wandler 15. Falls der Energiespeicher 14 vollgeladen ist und vom DC-DC-Wandler 15 momentan weniger Leistung benötigt wird als die Zweileiterschleife an den Sensor abgibt, fließt der restliche Strom durch die Shunt-Schaltung 9 wieder zurück zur nicht dargestellten Quelle.

Die Steuer- und Messwertverarbeitungsschaltung 4 kontrolliert den Messablauf innerhalb des Sensors, ermittelt aus den Sensorsignalen der Sende- und Empfangsschaltung 5 einen Messwert in Form eines Befüllungsgrads eines Behältnisses und kommuniziert den Messwert nach außen. Sie enthält hierzu eine Controllerschaltung 16 und eine Kommunikations- und Interfaceschaltung 17. Die Controllerschaltung 16 besteht beispielsweise aus einem Mikrocontroller mit entsprechender Peripherie. Die Kommunikations- und Interfaceschaltung 17 liefert den auszugebenden Messwert in analoger oder digitaler Form als Sollwert 11 an die Stromregelschaltung 8 und kann daneben noch verschiedene weitere Kanäle 18, 19 aufweisen um mit Personen oder anderen Geräten zu kommunizieren. Dies kann sowohl leitungsgebunden 18 als auch über Funk 19 geschehen.

Die Sende- und Empfangsschaltung 5 enthält alle Mikrowellenschaltungen, die zum Senden und Empfangen der hochfrequenten elektromagnetischen Wellen des Radarsensors nötig sind. Sie enthält weiterhin Schaltungskomponenten um das Empfangssignal soweit aufzubereiten und umzuformen, so dass es als Ausgangssignal 23 in digitaler Form der Signalverarbeitung der Controllerschaltung 16 zugänglich ist. Die Controllerschaltung 16 ihrerseits steuert über Steuerleitungen 24 die Sende- und Empfangsschaltung 5, indem sie wiederholt einzelne Messzyklen initiiert, kontrolliert, auswertet und durch Aktualisierung des Messwerts abschließt. Alle Komponenten der Steuer- und Messwertverarbeitungsschaltung 4 und der Sende- und Empfangsschaltung 5 des Radarsensors werden über geregelte Ausgangsspannungen 20, 21, 22 des DC-DC-Wandlers 15 versorgt.

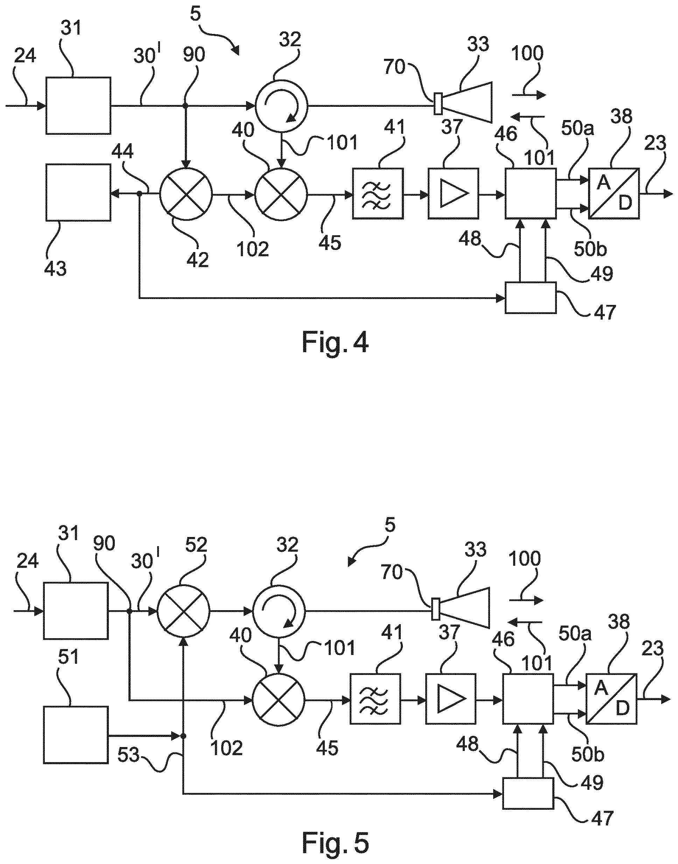

Fig. 4 und 5 zeigen Blockschaltbilder von Sende-Empfangsschaltungen 5, die in erfindungsgemäßen Radar-Füllstandsensoren alternativ verwendet werden können. Sie enthalten teilweise gleiche Komponenten, die deshalb mit gleichen Bezugszeichen versehen sind.

Die erfindungsgemäßen Ausführungsformen nach Fig. 4 und 5 haben den Vorteil einer einfacheren Schaltungsausführung, da nur Festfrequenzoszillatoren 43 bzw. 51 notwendig sind. Die bei der Mischung mit den Mischern 42 bzw. 52 entstehenden Ausgangsfrequenzen liegen näher zusammen und deshalb bedarf diejenige Frequenz, welche als Nutzfrequenz ausgefiltert werden soll, eines aufwendigeren Bandfilters. (Bsp. zu Fig. 4: Sendefrequenz 1GHz, Oszillatorfrequenz 10MHz, entstehende Mischer-Ausgangsfrequenzen sind u.a. 0.99GHz, 1GHz, 1.01GHz; genutzt werden soll beispielsweise nur die Frequenz 0.99GHz als Lokaloszillator für den Mischer 40).

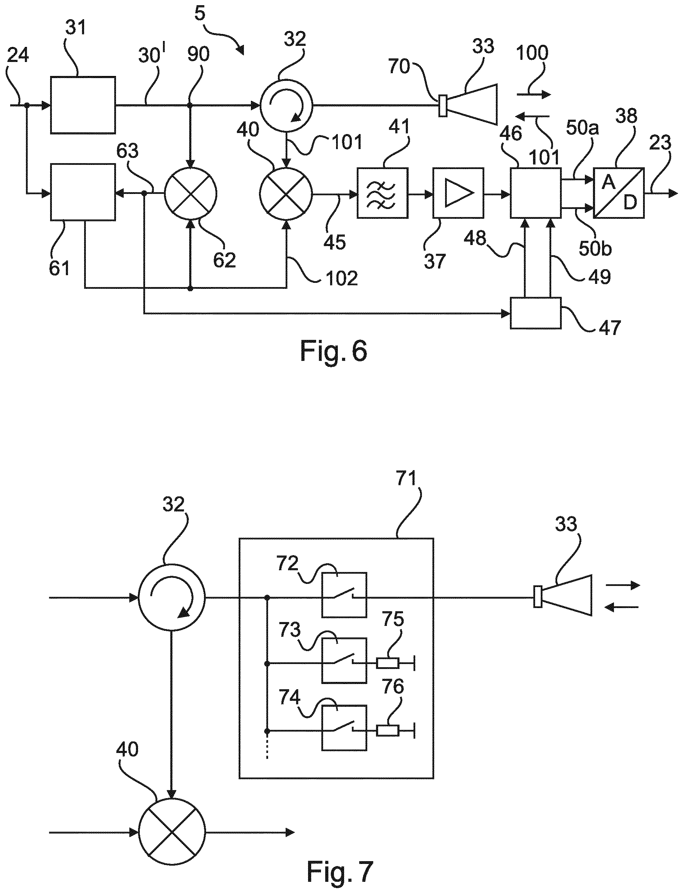

Dieses wird durch die aufwendigere Schaltungsausführung nach Fig. 6, die nicht Teil der Erfindung ist, vermieden (Bsp. zu Fig. 6: Sendefrequenz 1GHz, Ausgangsfrequenz Synthesizer 61 1.01GHz, entstehende Ausgangsfrequenzen des Mischers 62 sind u.a. 10MHz, 1GHz, 1.01GHz, 2.01GHz, genutzt wird die Ausgangsfrequenz 10MHz).

Die Sende- und Empfangsschaltung 5 nach Fig. 2 zur Umsetzung des bekannten FMCW-Verfahrens mit homodyner Empfangsmischung wurde bereits in der Einleitung erläutert.

Fig. 4 und 5 zeigen mögliche Schaltungsausführungen in Form von vereinfachten Blockschaltbildern zur Umsetzung des erfindungsgemäßen Verfahrens. Beiden Blockschaltbildern gemeinsam ist die heterodyne Schaltungsausführung, die eine Empfangsmischung des empfangenen Signals mit einem Lokaloszillatorsignal unterschiedlicher Frequenz vorsieht, so dass am Mischerausgang eine Zwischenfrequenz entsteht.

In Fig. 4 wird vom Synthesizer 31 ein Sendesignal erzeugt, welches über den Zirkulator 32 oder Richtkoppler 32 zur Antenne 33 geleitet und von dieser abgestrahlt wird. Die Antenne 33 wandelt dabei ein über eine Leitung zugeführtes Hochfrequenzsignal in eine elektromagnetische Welle 100, welche entweder frei abgestrahlt oder alternativ über einen Wellenleiter, beispielsweise einen Hohlleiter oder einen Eindraht- oder Mehrdrahtleiter, in Richtung Reflektor geführt wird. Die am Reflektor (Füllgutoberfläche) reflektierte Welle 101 gelangt wenigstens teilweise wieder zurück zur Antenne 33 und wird zurück in ein leitungsgeführtes Empfangssignal gewandelt. Dieses gelangt über den Zirkulator oder Richtkoppler 32 nun zum Empfangsmischer 40.

Der Zirkulator oder Richtkoppler 32 ist ein im Bereich der Radar-Füllstandmessung bekanntes Bauteil, welches bei monostatischem Betrieb, also bei Verwendung der gleichen Antenne zum Senden und Empfangen, vorteilhaft einsetzbar ist. Er besitzt mindestens drei Ports und leitet richtungsselektiv Signale von einem Port vorwiegend zu einem zweiten Port, während der dritte Port hierbei entkoppelt ist. Bei einem ebenfalls möglichen, hier nicht näher gezeigten bi-statischen Betrieb werden zum Senden und Empfangen zwei separate Antennen verwendet. Dabei entfällt der Zirkulator oder Richtkoppler 32 und das Signal gelangt einerseits vom Synthesizer 31 zur Sendeantenne und andererseits von der Empfangsantenne zum Empfangsmischer 40.

Der Synthesizer 31 dient zur Erzeugung von verschiedenen Sinusschwingungen verschiedener diskreter Frequenzen. Dazu enthält er einen abstimmbaren Oszillator, beispielsweise einen VCO (voltage controlled oscillator). Außerdem enthält er in vorteilhafter Weise eine Regelschleife und einen Referenzoszillator. Die Regelschleife, beispielsweise eine Phasenregelschleife PLL (phase-locked loop), regelt die Frequenz des abstimmbaren Oszillators so, dass sie in einem bestimmten, einstellbaren Verhältnis zur Frequenz des Referenzoszillators steht.

Die Einstellung des Frequenzverhältnisses geschieht vorteilhaft digital, beispielsweise gesteuert durch die Controllerschaltung 16, und bedeutet meist die Umschaltung eines oder mehrerer Teilerbausteine, welche die Frequenz von Referenzoszillator und / oder des abstimmbaren Oszillators herunterteilen. Dabei sind neben einfachen ganzzahligen Teilern auch nicht ganzzahlige Teiler, sogenannte fractional N-Teiler, möglich. Durch die Verwendung solcher Teiler ist es möglich, die Ausgangsfrequenz des Synthesizers 31 in sehr feinen Stufen über einen relativ großen Frequenzbereich zu verstellen.

Ein Teil des Ausgangssignals des Synthesizers 31 wird an der Abzweigung 90 abgezweigt, beispielsweise über einen nicht näher gezeigten Power-Splitter oder einen Koppler, um das Lokaloszillatorsignal für den Empfangsmischer 40 zu bilden. Dazu wird über den Mischer 42 das abgezweigte Synthesizersignal 30' mit einem Ausgangssignal 44 eines Festfrequenzoszillators 43 gemischt, wodurch verschiedene neue Frequenzanteile wie die Summenfrequenz und die Differenzfrequenz aus den beiden Eingangsfrequenzen entstehen. Beide können nach entsprechender, hier nicht dargestellter Bandfilterung wahlweise als oben erwähntes Lokaloszillatorsignal des Empfangsmischers 40 dienen. Im Empfangsmischer 40 entsteht aus Lokaloszillatorsignal und Empfangssignal unter anderem die Differenzfrequenz beider, die somit genau der Ausgangsfrequenz des Festfrequenzoszillators 43 entspricht. Dieses als Zwischenfrequenzsignal bezeichnete Ausgangssignal 45 des Empfangsmischers 40 besitzt neben der eben erwähnten festen Frequenz eine Phasenlage, die zusammen mit der Amplitude des Zwischenfrequenzsignals eine komplexe Kenngröße des Reflexionskoeffizienten aller an der Reflexion der Welle beteiligter Reflektoren definiert. Oder mit anderen Worten ausgedrückt ist die Phasenlage des Zwischenfrequenzsignals von der gegenseitigen Phasenlage von Lokaloszillatorsignal und Empfangssignal abhängig. Die Phasenlage des Empfangssignals seinerseits hängt ab von der zurückgelegten Strecke der gesendeten bzw. empfangenen Welle und damit von der Reflektorentfernung, während die Phasenlage des Lokaloszillatorsignals vom Synthesizer-Ausgangssignal und damit dem gesendeten Signal abhängt. Somit ist die Phasenlage des Zwischenfrequenzsignals letztlich nur abhängig von der Phasenverschiebung zwischen Sendesignal und Empfangssignal und damit von der Reflektorentfernung.

Im Schaltungsteil 37 wird dieses Zwischenfrequenzsignal 45 bandgefiltert und bei Bedarf verstärkt, um den Signal-Rausch-Abstand zu erhöhen. Um den komplexen Reflexionskoeffizienten aus dem analog vorliegenden Zwischenfrequenzsignal zu bestimmen, sind verschiedene Varianten möglich. Zum einen ist hier eine direkte Digitalisierung des gefilterten und verstärkten Zwischenfrequenzsignals durch Abtastung und Analog-Digital-Wandlung möglich, so dass die nachfolgende digitale Bestimmung von Phase und Amplitude des Zwischenfrequenzsignals direkt die gesuchte Amplitude und Phase des komplexen Reflexionskoeffizienten liefert. Diese Variante ist in Fig. 4 nicht dargestellt.

Zum anderen kann durch Verwendung eines Quadraturdemodulators 46 das gefilterte und verstärkte Zwischenfrequenzsignal in seine komplexen Bestandteile, also den Realteil 50a und den Imaginärteil 50b, zerlegt und danach beide Anteile getrennt analog-digital gewandelt werden. Dazu sind dem Quadraturdemodulator 46 zusätzlich noch ein Teil 48 des Ausgangssignals 44 des Festfrequenzoszillators 43 und weiterhin ein zu diesem Signal um 90° phasenverschobenes Signal 49 zuzuführen, welches im Phasenschieber 47 erzeugt wird. Vorteilhaft an der Verwendung des Quadraturdemodulators ist, dass Real- und Imaginärteil des Zwischenfrequenzsignals als Basisbandsignale 50a, 50b vorliegen, d.h. keine hohen Frequenzanteile mehr enthalten und damit sehr einfach zu digitalisieren sind. Wie bereits angedeutet erfolgt nach der Analog-Digitalwandlung mit dem Wandler 38 die Weiterverarbeitung der Messwerte innerhalb der Messwertverarbeitungsschaltung 4. Diese enthält beispielsweise eine Controllerschaltung 16 inklusiv der gesamten notwendigen Peripherie, insbesondere nichtflüchtiger und flüchtiger Speicher. Der Schaltungsteil 16 enthält auch Programmcode zur Ablaufsteuerung eines Messzyklus, d.h. zur Initiierung der Aussendung der Wellen und der Steuerung der Frequenzen sowie der Digitalisierung der Messwerte.

Die in Fig. 4 gezeigte erfindungsgemäße Schaltungsanordnung erlaubt wie beschrieben die Bestimmung eines komplexen Reflexionskoeffizienten auf einer bestimmten Ausgangsfrequenz des Synthesizers 31. Dieser komplexe Reflexionskoeffizient setzt sich zusammen aus allen Reflexionsanteilen, die im empfangenen Signal enthalten sind. Sind mehrere Reflektoren daran beteiligt, so sind die einzelnen Signalanteile nicht mehr separierbar und eine Bestimmung der Distanz der einzelnen Reflektoren nicht möglich. Wiederholt man diese Messung auf weiteren eingestellten Ausgangsfrequenzen innerhalb eines bestimmten Frequenzbandes, lässt sich aber eine digitale Wertetabelle bestehend aus den eingestellten Frequenzwerten und den zugehörigen komplexen Reflexionskoeffizienten erstellen. In vorteilhafter Weise werden dabei die Frequenzabstände aller Frequenzwerte gleich gewählt, so dass die Frequenzwerte das Frequenzband in äquidistante Abschnitte unterteilen. Das damit erzeugte bandbegrenzte Spektrum der digitalen Reflexionskoeffizienten wird anschließend einer inversen Fouriertransformation, beispielsweise bei äquidistanten Frequenzabständen einer IFFT (inverse fast fourier transformation), unterzogen, die das Frequenzsignal in ein Zeitsignal transformiert. Dieses digitale Zeitsignal wiederum ist charakteristisch für die Summe der Reflexionen des ausgesandten und wieder empfangenen Messsignals. Es liegt vor in Form einer Wertetabelle von Zeitwerten und zugehörigen Reflexionsanteilen und kann hinsichtlich Ermittlung von lokalen Maxima ausgewertet werden. Diese lokalen Maxima kennzeichnen die einzelnen Reflexionen der verschiedenen Reflektoren, die nach der zugeordneten Zeit empfangen wurden. In dieser Form gleicht nun diese Zeit-Reflexionsamplitude-Wertetabelle den aus den bekannten Füllstandradarverfahren geläufigen digitalisierten Reflexionsprofilen. Weitere Auswerteschritte zur Bestimmung des gesuchten Echos der Füllgutoberfläche und die Bestimmung des exakten Reflexionszeitpunkts dieses Echos können deshalb aus den bekannten Methoden der Puls-Radar- oder FMCW-Radarsysteme übernommen werden. So ist es beispielsweise von Vorteil, bei möglichst leerem Füllgutbehälter die vorhandenen Reflexionen als sogenannte Störechos abzuspeichern, um damit die Erkennung des Echos der Füllgutoberfläche zu erleichtern.

Das erfindungsgemäße Blockschaltbild in Fig. 5 enthält viele Elemente aus Fig. 4, die mit den gleichen Bezugszeichen versehen sind. Es unterscheidet sich von Fig. 4 dadurch, dass das Ausgangssignal 30' des Synthesizers 31 im Mischer 52 durch Zumischung des Signals des Festfrequenzoszillators 51 in der Frequenz um einen konstanten Betrag erhöht oder erniedrigt wird. Der Empfangsmischer 40 bildet hier die Differenzfrequenz aus dem Empfangssignal und dem Signal 30' des Synthesizers 31, welches in diesem Fall das Lokaloszillatorsignal des Mischers 40 ist. Das dadurch entstandene Zwischenfrequenzsignal 45 am Ausgang des Empfangsmischers 40 besitzt deshalb genau wie bei der Anordnung von Fig. 4 die feste Frequenz des Festfrequenzoszillators, in diesem Fall des Oszillators 51.

Fig. 6 zeigt eine weitere Variante, die nicht Teil der Erfindung ist, mit heterodynem Empfängerprinzip. Sie unterscheidet sich von den bisher beschriebenen Blockschaltbildern darin, dass statt des Festfrequenzoszillators 43 bzw. 51 ein zweiter Synthesizer 61 vorhanden ist. Dieser ist grundsätzlich aus gleichen Funktionseinheiten aufgebaut wie der bereits beschriebene Synthesizer 31. Als Regelgröße dient jedoch nicht die Ausgangsfrequenz des Synthesizers 61, sondern das Mischer-Ausgangssignal 63 des Mischers 62, welcher die Differenzfrequenz zwischen den beiden Synthesizern bildet. Diese Differenzfrequenz wird durch die Regelschleife des Synthesizers 61 auf einen festgelegten Wert ausgeregelt. Da der Empfangsmischer 40 das Zwischenfrequenzsignal 45 mit der gleichen Differenzfrequenz bildet, ist diese Frequenz ebenso wie in den Fig. 4 und 5 konstant.

Zu den Blockschaltbildern ist anzumerken, dass sie auf die wesentlichen Komponenten reduziert sind und für die praktische Umsetzung notwendige Komponenten teilweise weggelassen oder vereinfacht dargestellt wurden, da sie dem Fachmann bekannt sind. Dies betrifft beispielsweise Filtermaßnahmen am Ausgang der Mischer, um nur die erwünschten Mischfrequenzen durchzulassen und unerwünschte Mischprodukte zu unterdrücken. Außerdem ist dem Fachmann geläufig, Signale bei Bedarf an verschiedenen Stellen der Signalkette zu verstärken, um den Signal-Rausch-Abstand zu erhöhen. Dies könnten beispielsweise Verstärker im Sendezweig oder im Empfangszweig vor dem Empfangsmischer sein. Außerdem wurde hier nur der für die unmittelbare Messtechnik wichtige Teil der Sensorschaltung dargestellt. Ein nach diesem Prinzip aufgebauter Füllstand-Radarsensor enthält selbstverständlich weitere Schaltungskomponenten wie ein Netzteil zur Spannungsversorgung und Schaltungsteile zur Übermittlung des gemessenen Füllstandwerts beispielsweise an eine übergeordnete Prozessleitstelle.

Eine vorteilhafte Weiterbildung eines nach diesem Prinzip aufgebauten Füllstand-Radarsensors sieht die Verwendung einer Referenzreflexion vor. Damit können Änderungen über der Betriebszeit oder der Betriebstemperatur des Sensors, die sich in negativer Weise auf den Messwert auswirken, eliminiert werden. Alle analogen Schaltungsteile in Sender und Empfänger, wie beispielsweise Mischer, Verstärker und Filter zeigen in ihrem Verhalten eine bestimmte Temperaturabhängigkeit. Damit sind auch die gemessenen komplexen Reflexionskoeffizienten hinsichtlich Amplitude und Phase über der Temperatur nicht konstant. Um dadurch entstehende Änderungen der Reflexionsamplituden und Reflexionszeitpunkte des Reflexionsprofils korrigieren zu können, ist die Erzeugung und Auswertung einer vorab bekannten Reflexion eines Referenzreflektors vorteilhaft. Als solche geeignet ist beispielsweise der Übergang der Antennenzuleitung auf die Antenne, siehe Bezugszeichen 70 in Fig. 4 bis 6. Da die Impedanzen der beiden üblicherweise nicht ganz genau aufeinander angepasst sind, entsteht an dieser Stelle eine zunächst unerwünschte Reflexion. Diese lässt sich aber nutzen als Referenzreflexion, die innerhalb des Reflexionsprofils als Zeit- und Amplitudenreferenz dient. Alle nachfolgenden Echos innerhalb des Echoprofils können bezüglich ihrer Laufzeit auf das gleichzeitig im Profil vorhandene Referenzecho bezogen werden, so dass statt einer absoluten Laufzeit eine Zeitdifferenz zwischen Referenzecho und zu vermessendem Füllgutecho bestimmt werden kann. Auf die gleiche Weise lassen sich temperaturbedingte Amplitudenänderungen dadurch korrigieren, dass man die Amplitude der Referenzreflexion auf einen vorbekannten Wert skaliert und den gleichen Skalierungswert ebenso auf alle anderen Amplituden anwendet.

Statt der Reflexion am Übergang zur Antenne eignet sich auch der geringe Anteil des Sendesignals als Referenzreflexion, welcher auf dem beim idealen Zirkulator oder Richtkoppler nicht möglichen, bei realen Bauteilen aber immer noch vorhandenen Weg über den Zirkulator oder Richtkoppler 32 vom Synthesizer 31 direkt zum Empfangsmischer 40 gelangt. Ebenso geeignet ist der Einbau einer definierten Reflexionsstelle zwischen Zirkulator 32 und Antenne 33, beispielsweise in Form einer Impedanzänderung an einer Stelle der hierfür verwendeten Hochfrequenzleitung.

Weiterhin geeignet ist der Einbau einer Umschalteinheit 71, die nicht Teil der Erfindung ist, in der Leitung zwischen Zirkulator 32 und Antenne 33 wie in Fig. 7 ausschnittsweise gezeigt. Das in Fig. 7 gezeigte Blockschaltbild beschränkt sich auf den Bereich zwischen Zirkulator 32 und Antenne 33. Die nicht dargestellten Komponenten können entsprechend den Blockschaltbildern von Fig. 4 bis Fig. 6 aufgebaut sein. Die Umschalteinheit 71 enthält mindestens einen Hochfrequenzschalter 72 und schaltet, gesteuert über den Mikrocontroller 16, in einem ersten Betriebszustand das Sendesignal vom Zirkulator zur Antenne durch, während die übrigen Hochfrequenzschalter 73, 74 und eventuell weitere, hier nicht dargestellte Hochfrequenzschalter geöffnet sind.

In einem zweiten Betriebszustand leitet die Umschalteinheit 71 das vom Zirkulator 32 herkommende Signal statt zur Antenne auf eine Impedanz 75. Dazu wird der Hochfrequenzschalter 73 geschlossen, während alle anderen Schalter 72, 74 geöffnet sind. Dadurch ergibt sich an der Impedanz 75 eine Referenzreflexion, die zurück zum Zirkulator und von dort zum Empfangsmischer 40 gelangt. Bei der Impedanz 75 kann es sich grundsätzlich um eine beliebige Impedanz, vorzugsweise aber um einen Kurzschluss oder einen Leerlauf handeln. Weiterhin kann es auch vorteilhaft sein, mit einem zusätzlichen Schalter 74 eine Impedanz 76 und im Bedarfsfall wie in Fig. 7 angedeutet mit weiteren Schaltern weitere Impedanzen einzuschalten, um in den unterschiedlichen Schalterstellungen beispielsweise sowohl Kurzschluss- als auch Leerlauf-Reflexionen als auch angepasste Impedanzen auf die vom Zirkulator herkommende Leitung zu schalten. Durch die Messung und Auswertung verschiedener Referenzreflexionen ist eine exaktere Korrektur der Amplituden und Entfernungen der über die Antenne 33 gemessenen Reflexionen möglich. Im Unterschied zu den oben beschriebenen Varianten ist bei der Variante mit Schalter immer mindestens ein separater Referenz-Messzyklus mit veränderter Schalterstellung zur Bestimmung der Referenzinformationen nötig. Vorteilhaft daran ist, dass in "normaler" Schalterstellung ein Reflexionsprofil zur Aufnahme der Füllgutreflexion nicht durch eine überlagerte Referenzreflexion gestört werden kann.

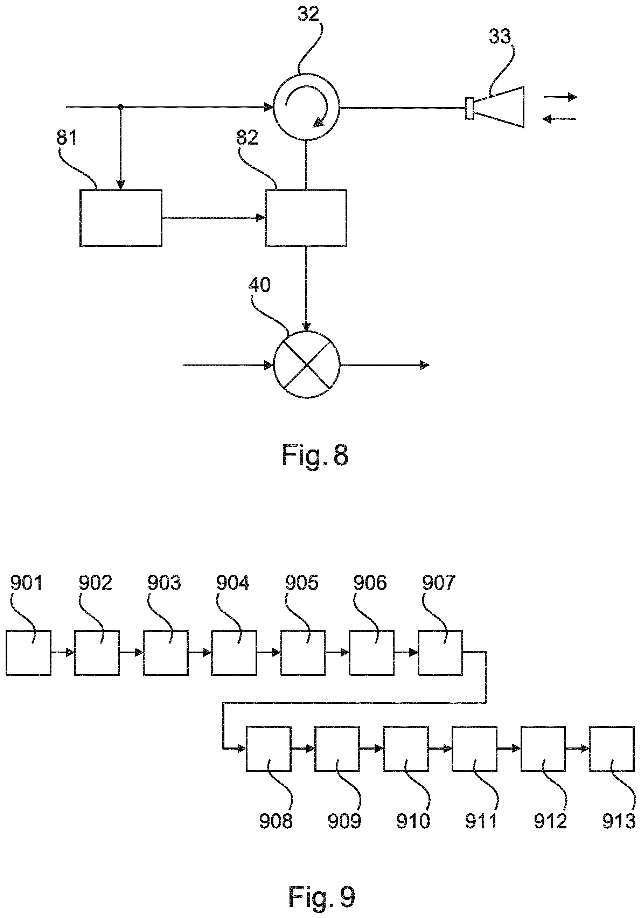

Weiterhin vorteilhaft lässt sich eine Referenzreflexion, die nicht Teil der Erfindung ist, auch nach dem wiederum nur ausschnittsweise dargestellten Blockschaltbild nach Fig. 8 erzeugen. Dabei wird ein Teil des Sendesignals am Eingang des Zirkulators 32 abgezweigt und in einem Laufzeitglied 81 definiert, beispielsweise durch das Durchlaufen einer bestimmten Leitungslänge, verzögert. Danach gelangt dieses Referenzsignal an die Umschalt- oder Koppeleinheit 82. An einem zweiten Eingang dieser Umschalt- oder Koppeleinheit 82 wird das vom Zirkulator 32 herkommende Empfangssignal eingespeist. Die Umschalt- oder Koppeleinheit 82 leitet entweder wahlweise eines der beiden Eingangssignale oder beide kombinierten Eingangssignale an den Mischer 40 weiter, wo sie in der oben schon beschriebenen Weise in der Frequenz umgesetzt und weiterverarbeitet werden. Dazu enthält die Umschalt- oder Koppeleinheit 82 entweder einen HF-Schalter oder einen Signalkoppler. Der Vorteil dieser Schaltungsvariante liegt darin, dass durch die wählbare Laufzeit des Laufzeitglieds 81 die Referenzreflexion an eine Stelle des Echoprofils gelegt werden kann, an der keine gegenseitige Beeinflussung mit Reflexionen von Messobjekten zu befürchten ist. Versieht man das Laufzeitglied 81 zusätzlich noch mit einer definierten Signaldämpfung, so kann auch die Amplitude der Referenzreflexion auf einen gewünschten Wert voreingestellt werden. Alternativ kann es in Abwandlung dieser Variante auch vorteilhaft sein, das Laufzeitglied 81 statt in dem abgezweigten Signalpfad in den Signalpfad des Empfangssignals zwischen Zirkulator 32 und Umschalt- oder Koppeleinheit 82 einzubauen. Dadurch lässt sich erreichen, dass die Referenzreflexion als erstes Echo im Echoprofil, noch vor allen störenden internen Reflexionen und allen über die Antenne empfangenen Messreflexionen, erscheint.

Fig. 9 zeigt ein Flussdiagramm eines Verfahrens gemäß einer Ausführungsform, die nicht Teil der Erfindung ist.

In Schritt 901 wird ein erstes elektromagnetisches Signal mit abschnittsweise konstanter Frequenz erzeugt, wobei die einzelnen Frequenzen innerhalb eines definierten Frequenzbandes verteilt sind. In Schritt 902 (der im Regelfall gleichzeitig zu Schritt 901 erfolgen wird) wird ein zweites elektromagnetisches Signal erzeugt. Die beiden elektromagnetischen Signale stammen aus zumindest teilweise unterschiedlichen Signalquellenanordnungen. Das erste Signal wird in Schritt 903 in Richtung einer Füllgutoberfläche ausgesendet und in Schritt 904 an der Füllgutoberfläche reflektiert und dann in Schritt 905 wieder vom Messgerät empfangen. In Schritt 906 wird das empfangene Signal mit dem in Schritt 902 erzeugten Signal heterodyn gemischt, um ein Zwischenfrequenzsignal mit einer einheitlichen Frequenz, die unabhängig ist von der Frequenz des erstens Signals, zu erzeugen. In Schritt 907 wird das Zwischenfrequenzsignal zur Unterdrückung von störenden Signalanteilen außerhalb des Bereichs der Zwischenfrequenz gefiltert und verstärkt und in Schritt 908 wird daraus ein komplexer Reflexionskoeffizient in Form Betrag und Phase oder in Form von Real- und Imaginärteil auf der Grundlage des Zwischenfrequenzsignals bestimmt. In Schritt 909 wird eine digitale Wertetabelle bestehend aus oben genannten Frequenzwerten und zugehörigen komplexen Reflexionskoeffizienten erzeugt und in Schritt 910 wird diese Wertetabelle einer inversen Fourier-Transformation unterzogen, um in eine korrespondierende digitale Wertetabelle bestehend aus Zeitwerten und zugehörigen Reflexionskennwerten transformiert zu werden. In Schritt 911 wird das damit vorliegende zeitbasierte Reflexionsprofil zur Identifizierung der Reflexion der Füllgutoberfläche ausgewertet und in Schritt 912 wird der Zeitwert der Füllgutreflexion bestimmt und es erfolgt die Umrechnung des Zeitwertes in eine Reflektorentfernung auf Basis der vorbekannten Wellenausbreitungsgeschwindigkeit. In Schritt 913 wird der Wert des Befüllungsgrads (Füllstand) aus der vorbekannten Behälterhöhe, dem Abstand des Messgeräts zum Behälter und der zuvor bestimmten Reflektorentfernung bestimmt.

Weiter kann eine Referenzreflexion verwendet werden, um eine Korrektur der Amplituden und Entfernungen der über die Antenne gemessenen Reflexionen zu ermöglichen.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Füllstandradargerät, aufweisend:
eine erste Signalquellenanordnung (31, 51, 52) zum Erzeugen eines ersten elektromagnetischen Signals (30') mit abschnittsweise konstanter Frequenz, wobei die einzelnen Frequenzen innerhalb eines definierten Frequenzbandes verteilt sind;
eine zweite Signalquellenanordnung (43), die als Festfrequenzoszillator ausgeführt ist, zum Erzeugen eines zweiten elektromagnetischen Signals (44);
eine erste Mischeranordnung (42) zum heterodynen Mischen des ersten elektromagnetischen Signals (30') mit dem zweiten elektromagnetischen Signal (44) zum Erzeugen eines ersten gemischten Signals (102);
eine Sendeanordnung (33) zum Aussenden des ersten Signals in Richtung einer Füllgutoberfläche und zum Empfang des an der Füllgutoberfläche reflektierten ersten Signals (101);
eine zweite Mischeranordnung (40) zum heterodynen Mischen des empfangenen reflektierten ersten Signals mit dem ersten gemischten Signal (102) zur Bildung eines Zwischenfrequenzsignals (45) mit einer einheitlichen Frequenz, die unabhängig ist von der Frequenz des ersten Signals und die der Frequenz der zweiten Signalquellenanordnung (43) entspricht; und
eine Auswerteschaltung (41, 37, 46, 47, 38, 16) zum Bestimmen eines Füllstands aus dem Zwischenfrequenzsignal (45).

2. Füllstandradargerät, aufweisend:
eine erste Signalquellenanordnung (31, 51, 52) zum Erzeugen eines ersten elektromagnetischen Signals (30') mit abschnittsweise konstanter Frequenz, wobei die einzelnen Frequenzen innerhalb eines definierten Frequenzbandes verteilt sind;
eine zweite Signalquellenanordnung (51), die als Festfrequenzoszillator ausgeführt ist, zum Erzeugen eines zweiten elektromagnetischen Signals (53);
eine erste Mischeranordnung (52) zum heterodynen Mischen des ersten elektromagnetischen Signals (30') mit dem zweiten elektromagnetischen Signal (53) zum Erzeugen eines zweiten gemischten Signals;
eine Sendeanordnung (33) zum Aussenden des zweiten gemischten Signals in Richtung einer Füllgutoberfläche und zum Empfang des an der Füllgutoberfläche reflektierten zweiten gemischten Signals (101);
eine zweite Mischeranordnung (40) zum heterodynen Mischen des empfangenen reflektierten zweiten gemischten Signals mit dem ersten Signal (30') zur Bildung eines Zwischenfrequenzsignals (45) mit einer einheitlichen Frequenz, die unabhängig ist von der Frequenz des ersten Signals und die der Frequenz der zweiten Signalquellenanordnung (51) entspricht; und
eine Auswerteschaltung (41, 37, 46, 47, 38, 16) zum Bestimmen eines Füllstands aus dem Zwischenfrequenzsignal (45).

3. Füllstandradargerät nach Anspruch 1 oder 2,
wobei die Auswerteschaltung (41, 37, 46, 47, 38, 16) eine erste Schaltungsanordnung (46, 47) aufweist zum Bestimmen eines komplexen Reflexionskoeffizienten aus dem Zwischenfrequenzsignal (45) in Form von Betrag und Phase oder Real- und Imaginärteil.

4. Füllstandradargerät nach einem der vorhergehenden Ansprüche,
wobei die Auswerteschaltung (41, 37, 46, 47, 38, 16) eine zweite Schaltungsanordnung (38, 16) zur Erstellung einer Wertetabelle aus den abschnittsweise konstanten Frequenzen des ersten Signals (100) und den zugehörigen komplexen Reflexionskoeffizienten aufweist.

5. Füllstandradargerät nach einem der vorhergehenden Ansprüche,
wobei die zweite Schaltungsanordnung (38, 16) zum Durchführen einer inversen Fouriertransformation der Wertetabelle vom Frequenzbereich in den Zeitbereich und zur darauffolgenden Bestimmung des Füllstands aus der transformierten Wertetabelle eingerichtet ist.

6. Füllstandradargerät nach einem der vorhergehenden Ansprüche,
wobei die einzelnen Frequenzen des ersten Signals (100) äquidistant zueinander sind.

7. Füllstandradargerät nach einem der vorhergehenden Ansprüche, weiter aufweisend:
einen Referenzreflektor (70, 75, 76);
wobei die Auswerteschaltung (41, 37, 46, 47, 38, 16) eingerichtet ist, das an dem Referenzreflektor reflektierte erste Signal bzw. das zweite gemischte Signal als Zeit- und/oder Amplitudenreferenz bei der Füllstandbestimmung zu verwenden.

8. Verfahren zur Füllstandbestimmung, aufweisend die folgenden Schritte:
Erzeugen eines ersten elektromagnetischen Signals (30') mit abschnittsweise konstanter Frequenz, wobei die einzelnen Frequenzen innerhalb eines definierten Frequenzbandes verteilt sind;
Erzeugen eines zweiten elektromagnetischen Signals (44) mit einer festen Frequenz;
heterodynes Mischen des ersten Signals (30') mit dem zweiten Signal (44) zum Erzeugen eines ersten gemischten Signals (102);
Aussenden des ersten Signals (30') in Richtung einer Füllgutoberfläche und Empfangen des an der Füllgutoberfläche reflektierten ersten Signals (101);
heterodynes Mischen des empfangenen reflektierten ersten Signals mit dem ersten gemischten Signal (102) zur Bildung eines Zwischenfrequenzsignals (45) mit einer einheitlichen Frequenz, die unabhängig ist von der Frequenz des ersten Signals und die der Frequenz des zweiten elektromagnetischen Signals entspricht;
Bestimmen eines Füllstands aus dem Zwischenfrequenzsignal (45).

9. Verfahren zur Füllstandbestimmung, aufweisend die folgenden Schritte:
Erzeugen eines ersten elektromagnetischen Signals (30') mit abschnittsweise konstanter Frequenz, wobei die einzelnen Frequenzen innerhalb eines definierten Frequenzbandes verteilt sind;
Erzeugen eines zweiten elektromagnetischen Signals (53) mit einer festen Frequenz;
heterodynes Mischen des ersten Signals (30') mit dem zweiten Signal (53) zum Erzeugen eines zweiten gemischten Signals;
Aussenden des zweiten gemischten Signals in Richtung einer Füllgutoberfläche und Empfangen des an der Füllgutoberfläche reflektierten zweiten gemischten Signals;
heterodynes Mischen des empfangenen reflektierten zweiten gemischten Signals mit dem ersten Signal (30') zur Bildung eines Zwischenfrequenzsignals (45) mit einer einheitlichen Frequenz, die unabhängig ist von der Frequenz des ersten Signals und die der Frequenz des zweiten elektromagnetischen Signals entspricht;
Bestimmen eines Füllstands aus dem Zwischenfrequenzsignal (45).

10. Programmelement, das, wenn es auf einer Auswerteschaltung (41, 37, 46, 47, 38, 16) eines Füllstandradargeräts ausgeführt wird, das Füllstandradargerät veranlasst, die Schritte nach Anspruch 8 oder 9 durchzuführen.

11. Computerlesbares Medium, auf dem ein Programmelement nach Anspruch 10 gespeichert ist.

## Claims

1. A fill level radar device, comprising:
a first signal source arrangement (31, 51, 52) for generating a first electromagnetic signal (30') with a sectionwise constant frequency, the individual frequencies being distributed within a defined frequency band;
a second signal source arrangement (43, 51), which is designed as a fixed- frequency oscillator, for generating a second electromagnetic signal (44);
a first mixer arrangement (42) for heterodyne mixing the first electromagnetic signal (30') with the second electromagnetic signal (44, 53) to produce a first mixed signal (102);
a transmitting arrangement (33) for transmitting the first signal in direction of a product surface and for receiving the first signal (101) reflected at the product surface;
a second mixer arrangement (40) for heterodyne mixing the received reflected first signal with the first mixed signal (102) to form an intermediate frequency signal (45) having a uniform frequency, which is independent of the frequency of the first signal and which corresponds to the frequency of the second signal source arrangement (43, 51); and
an evaluation circuit (41, 37, 46, 47, 38, 16) for determining a fill level from the intermediate frequency signal.

2. A fill level radar device, comprising:
a first signal source arrangement (31, 51, 52) for generating a first electromagnetic signal (30') with a sectionwise constant frequency, the individual frequencies being distributed within a defined frequency band;
a second signal source arrangement (51), which is designed as a fixed- frequency oscillator, for generating a second electromagnetic signal (53);
a first mixer arrangement (52) for heterodyne mixing the first electromagnetic signal (30') with the second electromagnetic signal (53) to produce a second mixed signal;
a transmitting arrangement (33) for transmitting the second mixed signal in direction of a product surface and for receiving the second mixed signal (101) reflected at the product surface;
a second mixer arrangement (40) for heterodyne mixing the received reflected second mixed signal with the second signal (44, 53) to form an intermediate frequency signal (45) having a uniform frequency which is independent of the frequency of the first signal and which corresponds to the frequency of the second signal source arrangement (51); and
an evaluation circuit (41, 37, 46, 47, 38, 16) for determining a fill level from the intermediate frequency signal.

3. The fill level radar device according to claim 1 or 2,
wherein the evaluation circuit (41, 37, 46, 47, 38, 16) comprises a first circuit arrangement (46, 47) for determining a complex reflection coefficient from the intermediate frequency signal (45) in the form of magnitude and phase or real and imaginary parts.

4. The fill level radar device according to one of the preceding claims,
wherein the evaluation circuit (41, 37, 46, 47, 38, 16) has a second circuit arrangement (38, 16) for producing a table of values from the sectionwise constant frequencies of the first signal (100) and the associated complex reflection coefficients.

5. The fill level radar device according to one of the preceding claims,
wherein the second circuit arrangement (38, 16) is arranged to perform an inverse Fourier transformation of the value table from the frequency domain into the time domain and to subsequently determine the filling level from the transformed value table.

6. The fill level radar device according to one of the preceding claims,
where each one the frequencies of the first signal (100) are equidistant from each other.

7. The fill level radar device according to one of the preceding claims, further comprising:
a reference reflector (70, 75, 76);
wherein the evaluation circuit (41, 37, 46, 47, 38, 16) is configured to use the first signal reflected at the reference reflector or the second mixed signal as a time and/or amplitude reference in the level determination.

8. A method for fill level determination, comprising the following steps:
generating a first electromagnetic signal (30') with a sectionwise constant frequency, the individual frequencies being distributed within a defined frequency band;
generating a second electromagnetic signal (44) having a fixed frequency;
heterodyne mixing of the first signal (30') with the second signal (44) to produce a first mixed signal (102);
transmitting the first signal (30') in direction of a product surface and receiving the first signal (101) reflected at the product surface;
heterodyne mixing the received reflected first signal with the first mixed signal (102) to form an intermediate frequency signal (45) having a uniform frequency which is independent of the frequency of the first signal and which corresponds to the frequency of the second electromagnetic signal;
determining a fill level from the intermediate frequency signal.

9. A method for fill level determination, comprising the following steps:
generating a first electromagnetic signal (30') having a sectionwise constant frequency, the individual frequencies being distributed within a defined frequency band;
generating a second electromagnetic signal (53) with a fixed frequency;
heterodyne mixing of the first signal (30') with the second signal (53) to generate a second mixed signal;
transmitting the second mixed signal in the direction of a product surface and receiving the second mixed signal reflected at the product surface;
heterodyne mixing the received reflected second mixed signal with the second signal to form an intermediate frequency signal (45) having a uniform frequency which is independent of the frequency of the first signal and which corresponds to the frequency of the second electromagnetic signal;
determining a fill level from the intermediate frequency signal.

10. A program element which, when executed on an evaluation circuit (41, 37, 46, 47, 38, 16) of a level radar device, causes the level radar device to perform the steps according to claim 8 or 9.

11. A computer-readable medium on which a program element according to claim 10 is stored.

## Revendications

1. Appareil de mesure de niveau par radar, comportant :
un premier agencement de source de signal (31, 51, 52) destiné à générer un premier signal électromagnétique (30') avec une fréquence constante par périodes, les différentes fréquences étant distribuées dans une bande de fréquences définie ;
un second agencement de source de signal (43), qui est réalisé sous la forme d'un oscillateur à fréquence fixe, destiné à générer un second signal électromagnétique (44) ;
un premier agencement de mélangeur (42) destiné à réaliser un mélange hétérodyne du premier signal électromagnétique (30') avec le second signal électromagnétique (44) pour générer un premier signal mélangé (102) ;
un agencement d'émission (33) destiné à émettre le premier signal en direction d'une surface de produit de remplissage et à recevoir le premier signal réfléchi (101) sur la surface de produit de remplissage ;
un second agencement de mélangeur (40) destiné à réaliser un mélange hétérodyne du premier signal réfléchi reçu avec le premier signal mélangé (102) pour former un signal de fréquence intermédiaire (45) avec une fréquence homogène qui est indépendante de la fréquence du premier signal et qui correspond à la fréquence du second agencement de source de signal (43) ; et
un circuit d'évaluation (41, 37, 46, 47, 38, 16) destiné à déterminer un niveau de remplissage à partir du signal de fréquence intermédiaire (45).

2. Appareil de mesure de niveau par radar, comportant :
un premier agencement de source de signal (31, 51, 52) destiné à générer un premier signal électromagnétique (30') avec une fréquence constante par périodes, les différentes fréquences étant distribuées dans une bande de fréquences définie ;
un second agencement de source de signal (51), qui est réalisé sous la forme d'un oscillateur à fréquence fixe, destiné à générer un second signal électromagnétique (53) ;
un premier agencement de mélangeur (52) destiné à réaliser un mélange hétérodyne du premier signal électromagnétique (30') avec le second signal électromagnétique (53) pour générer un second signal mélangé ;
un agencement d'émission (33) destiné à émettre le second signal mélangé en direction d'une surface de produit de remplissage et à recevoir le second signal mélangé réfléchi (101) sur la surface de produit de remplissage ;
un second agencement de mélangeur (40) destiné à réaliser un mélange hétérodyne du second signal mélangé réfléchi reçu avec le premier signal (30') pour former un signal de fréquence intermédiaire (45) avec une fréquence homogène qui est indépendante de la fréquence du premier signal et qui correspond à la fréquence du second agencement de source de signal (51) ; et
un circuit d'évaluation (41, 37, 46, 47, 38, 16) destiné à déterminer un niveau de remplissage à partir du signal de fréquence intermédiaire (45).

3. Appareil de mesure de niveau par radar selon la revendication 1 ou 2,
dans lequel le circuit d'évaluation (41, 37, 46, 47, 38, 16) comporte un premier agencement de circuit (46, 47) destiné à déterminer un coefficient de réflexion complexe à partir du signal de fréquence intermédiaire (45) sous la forme quantité et phase ou partie réelle et partie imaginaire.

4. Appareil de mesure de niveau par radar selon l'une des revendications précédentes,
dans lequel le circuit d'évaluation (41, 37, 46, 47, 38, 16) comporte un second agencement de circuit (38, 16) destiné à établir une table de valeurs à partir des fréquences constantes par périodes du premier signal (100) et des coefficients de réflexion complexes associés.

5. Appareil de mesure de niveau par radar selon l'une des revendications précédentes,
dans lequel le second agencement de circuit (38, 16) est conçu pour effectuer une transformation de Fourier inverse de la table de valeurs du domaine fréquentiel au domaine temporel et pour la détermination suivante du niveau de remplissage à partir de la table de valeurs transformée.

6. Appareil de mesure de niveau par radar selon l'une des revendications précédentes,
dans lequel les différentes fréquences du premier signal (100) sont équidistantes les unes des autres.

7. Appareil de mesure de niveau par radar selon l'une des revendications précédentes, comportant en outre :
un réflecteur de référence (70, 75, 76) ;
le circuit d'évaluation (41, 37, 46, 47, 38, 16) étant conçu pour utiliser le premier signal réfléchi sur le réflecteur de référence ou le second signal mélangé comme référence de temps et/ou d'amplitude lors de la détermination du niveau de remplissage.

8. Procédé de détermination du niveau de remplissage, comportant les étapes suivantes :
génération d'un premier signal électromagnétique (30') avec une fréquence constante par périodes, les différentes fréquences étant distribuées dans une bande de fréquences définie ;
génération d'un second signal électromagnétique (44) avec une fréquence fixe ;
mélange hétérodyne du premier signal (30') avec le second signal (44) pour générer un premier signal mélangé (102) ;
émission du premier signal (30') en direction d'une surface de produit de remplissage et réception du premier signal réfléchi (101) sur la surface de produit de remplissage ;
mélange hétérodyne du premier signal réfléchi reçu avec le premier signal mélangé (102) pour former un signal de fréquence intermédiaire (45) avec une fréquence homogène qui est indépendante de la fréquence du premier signal et qui correspond à la fréquence du second signal électromagnétique ;
détermination d'un niveau de remplissage à partir du signal de fréquence intermédiaire (45).

9. Procédé de détermination du niveau de remplissage, comportant les étapes suivantes :
génération d'un premier signal électromagnétique (30') avec une fréquence constante par périodes, les différentes fréquences étant distribuées dans une bande de fréquences définie ;
génération d'un second signal électromagnétique (53) avec une fréquence fixe ;
mélange hétérodyne du premier signal (30') avec le second signal (53) pour générer un second signal mélangé ;
émission du second signal mélangé en direction d'une surface de produit de remplissage et réception du second signal mélangé réfléchi sur la surface de produit de remplissage ;
mélange hétérodyne du second signal mélangé réfléchi reçu avec le premier signal (30') pour former un signal de fréquence intermédiaire (45) avec une fréquence homogène qui est indépendante de la fréquence du premier signal et qui correspond à la fréquence du second signal électromagnétique ;
détermination d'un niveau de remplissage à partir du signal de fréquence intermédiaire (45).

10. Élément de programme qui, quand il est exécuté sur un circuit d'évaluation (41, 37, 46, 47, 38, 16) d'un appareil de mesure de niveau par radar amène l'appareil de mesure de niveau par radar à exécuter les étapes selon la revendication 8 ou 9.

11. Support lisible par ordinateur, sur lequel est enregistré un élément de programme selon la revendication 10.
